# EUROPÄISCHE PATENTSCHRIFT

(11) **EP 1 658 467 B1**
(45) Veröffentlichungstag und Bekanntmachung des Hinweises auf die Patenterteilung: **07.11.2007**
(21) Anmeldenummer: 04740124.5
(22) Anmeldetag: 21.06.2004
(51) Int. Cl.: F27D 3/00, F27D 3/14, C21C 5/00, C21C 5/52, C21C 5/54, C22B 7/04

(54) **ELEKTROREDUKTIONSOFEN**
ELECTRIC REDUCING FURNACE
FOUR D'ELECTROREDUCTION

(30) Priorität: 31.07.2003 DE 10335847
(43) Veröffentlichungstag der Anmeldung: 24.05.2006
(73) Patentinhaber: SMS Demag Aktiengesellschaft, 40237 Düsseldorf (DE)
(72) Erfinder: KUNZE, Jürgen, 46509 Xanten (DE)
(74) Vertreter: Klüppel, Walter
(86) Internationale Anmeldenummer: PCT/EP2004/006687
(87) Internationale Veröffentlichungsnummer: WO 2005/022062

(56) Entgegenhaltungen:
- EP-A- 0 247 923
- EP-A- 0 646 758
- EP-A- 0 672 881
- WO-A-00/79014
- WO-A-93/13228
- WO-A-03/029500

## Beschreibung

Die Erfindung betrifft einen Elektroreduktionsofen zur Durchführung von Reduktionsprozessen, insbesondere zur Reduktion von Schlacke zur Rückgewinnung metallischer Bestandteile, mittels elektrischer Energie, die über mindestens eine Elektrode in das Ofeninnere eingebracht wird, wobei der Reduktionsofen eine Chargieröffnung für Beschickungsmaterial aufweist, das über eine Beschickungseinrichtung transportiert wird, sowie eine Öffnung zur Ableitung für das während des Reduktionsprozesses entstehenden Gases aus dem Ofen, wobei die Chargieröffnung für das Beschickungsmaterial gleichzeitig als Abgasleitungsöffnung für das entstehende Gas dient.

Die zu reinigende Schlacke wird in den Ofen chargiert und reduziert. Die mit der Schlacke chargierten Metalle liegen in oxidischer (z.B. Cu2o), sulfidischer (z.B. Cu2S) und metallischer Form (z.B. Cu) vor. Die oxidischen Bestandteile werden durch Zugabe eines Reduktionsmittels zu Metallen reduziert. Die metallischen und sulfidischen Bestandteile setzen sich aufgrund der unterschiedlichen Dichten am Ofenboden ab.

Bei derartigen Reduktionsöfen zur Reduktion bzw. Reinigung von Schlacken ist es bekannt, dass das Prozessgas, wie CO, teilweise oder vollkommen im Ofen verbleibt und verbrannt wird.

Hierbei wird das CO-haltige Prozessgas mit Luft, die durch geeignete Öffnungen im Ofenmantel oder in der Ofendecke angesaugt wird, oberhalb der Schmelze bzw. Schlacke im Ofen verbrannt und auf eine bestimmte Temperatur abgekühlt, die durch den Typ der nachgeschalteten Entstaubungsanlage vorgegeben ist.

Dies ist mit folgenden Nachteilen verbunden. Bei teilweiser Verbrennung des Prozessgases besteht zum einen die Gefahr einer CO-Explosion oder des Austretens des giftigen CO-Gases in das Ofenhaus.

Zum anderen kommt es aufgrund der Verbrennung der Gase sowie auch gasförmiger Metalldämpfe im Ofen zu einem erhöhten Abbrand der Elektroden sowie auch der Reduktionsmittel, wie Koks, Kohle usw. Dies wiederum ist mit hohen Energieverlusten verbunden, die in der Größenordnung von 3 bis 5 Tonnen Koks pro Tag und 0,5 bis 0,8 kg Elektrodenmaterial pro Tonne Einsatz liegen können. Bei einer Ofenanlage, die etwa 1.000 Tonnen Schlacke am Tag abreinigt, bedeuten dies Mehrkosten von 1.000 bis 1.500 US$ pro Tag.

Durch die Produktion von diesem zusätzlichen Abgas durch die unerwünschte Verbrennung der Elektroden und Reduktionsmittel sind Entstaubungsanlagen für höhere Abgasvolumina erforderlich. Zudem wird die Ausmauerung im Ofengasraum, speziell die Deckenausmauerung, stark thermisch belastet.

Ein Elektroreduktionsofen zur Reduktion von Schlacke ist aus der japanischen Veröffentlichungsschrift 2000039118 A bekannt. Pulverförmiges Einsatzmaterial wird über eine Beschickungseinrichtung durch eine entsprechende Chargieröffnung in der Seitenwand des Ofens auf Höhe der Schlackenschicht eingebracht und elektrisch eingeschmolzen. Bei der Reduktion entstehende Gase, wie insbesondere CO-Gas, wird mittels einer Abzugeinrichtung durch eine separate Ableitung in einer Tür im Ofendeckel abgezogen.

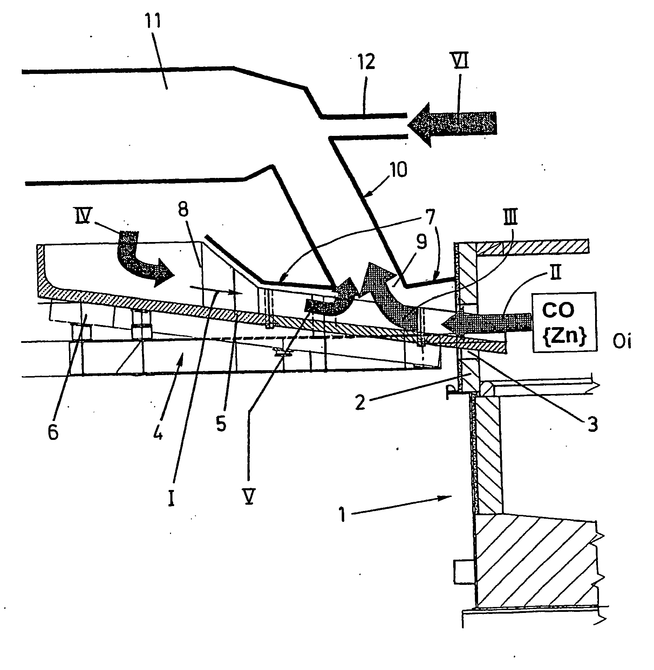

In der EP - A - 0 646 758 wird eine Vorrichtung zum Vorheizen und Zuführen von Schrott oder Roheisen in Form eines kalten Blocks und zum kontinuierlichen Zuführen desgleichen in einen Schmelzofen beschrieben. Dabei wird das Abgas zum Erwärmen bzw. Erhitzen des Schrottmaterials herangezogen. Zur Vereinfachung wird das Abgas durch bzw. über die Schrottzuführvorrichtung geleitet, d.h. dem Schrottmaterial entgegen und zwar über die gesamte Zuführvorrichtung, wie speziell in Figur 5 dargestellt.

Aus der EP - A - 0 672 881 ist ein Schmelzofen bekannt, der Vorwärmbehälter zum Vorwärmen von Rohmaterialien besitzt. Diesen Vorwärmbehältern wird das im Ofen entstehende Abgas zugeleitet. Daher ist gemäß der EP - A - 0 672 881 die Beschickungseinrichtung und das Kaminrohr zur Gasableitung identisch. Ein Vorwärmen der Schlacke ist nicht vorgesehen. Nachteilig ist eine nicht luftabgedichtete Bauweise.

Die WO 93/13 228 A weist ein Chargierrohr auf, durch welches der Schrott in den Ofen gelangt. Der Schrott wird hierzu über eine Aufgabeschurre zum Chargierrohr geleitet. Da das Chargierrohr angehoben bzw. abgesenkt werden kann, weist es im Bereich der Mündung der Aufgabeschurre ein Langloch auf. Durch diese Maßnahme wird keine luftabgedichtete Bauweise erreicht. Weiterhin wird das im Ofen entstehende Gas nicht durch das Chargierrohr mit dem darin befindlichen Schrott abgesaugt sondern durch einen Ringraum, welcher durch ein zweites Rohr und dem darin angeordneten Chargierrohr gebildet wird. Von Nachteil ist, dass ein Austritt von Gas durch das Chargierrohr nicht gewollt ist. Um dieses zu erreichen ist das Chargierrohr an seinem oberen Ende durch eine Stirnplatte verschlossen. Die US - A - 6 544 470 zeigt eine Gasabzugseinrichtung, welche die Seitenwand des Ofenobergefäßes durchdringt. Nachteilig ist, dass die Zuführung der Chargen hier getrennt von der Gasabzugseinrichtung über eine Fördereinrichtung erfolgt. D.h. die Fördereinrichtung wird nicht als Gasabzugseinrichtung genutzt.

Ausgehend vom Stand der Technik liegt der Erfindung die Aufgabe zugrunde, einen Elektroreduktionsofen derart weiterzubilden, dass die oben genannten Nachteile nicht auftreten.

Diese Aufgabe wird durch den Ofen mit den Merkmalen des Anspruchs 1 gelöst. Vorteilhafte Weiterentwicklungen sind in den Unteransprüchen beschrieben.

Kern der Erfindung ist die Ausführung des Ofens in einer luftabgedichteten Bauweise, indem durch eine luftdichte Öffnung im Ofen gleichzeitig Beschickungsgut, insbesondere flüssige Schlacke, chargiert und gleichzeitig das Ofengas abgeleitet oder abgesaugt wird. Auf diese Weise wird der Ofen optimal gegen unerwünschtes Lufteindringen geschützt. Eine Oxidation der Elektroden und/oder des Reduktionsmittels wird unterbunden.

Die Beschickungseinrichtung, die als Chargierrinne ausgebildet ist und die durch die gemeinsame Chargier- und Abgasöffnung in das Ofeninnere hineinragt, weist eine Abdeckung auf. Diese Abdeckung ist gegenüber dem Ofengefäß abgedichtet und nach oben hin als Abgaskamin ausgebildet ist.

Diese Ausführungsform ermöglicht eine Chargierung mittels Schlacke bei gleichzeitiger luftdichter Abdichtung und gleichzeitigem Verhindern des unerwünschten Abbrandes von Elektroden und Reduktionsmitteln. Die Abdeckung erlaubt eine kontinuierliche Chargierung, weil sie permanent wirksam ist. Bei einer Ofenfahrweise mit leichtem Überdruck verlässt das Prozessgas den Ofen über die Chargieröffnung im Ofenmantel durch den aus der Chargierrinne und ihrer Abdeckung gebildeten Abgaskamin.

Grundsätzlich ist es auch denkbar, diese gemeinsame Öffnung zum Chargieren und Ableiten von Gas mittels eines Schiebers abzudichten. Dies kommt aber nur dann in Frage, wenn nicht kontinuierlich chargiert wird.

Die Kaminform der Abdeckung wird dadurch ausgebildet, dass die Abdeckung der Beschickungseinrichtung etwa ofennah ein Kaminrohr zur Gasableitung aufweist, an das sich eine Nachverbrennungskammer anschließt. In diesem Kaminrohr kann es zu einer Teilverbrennung der Prozessgase kommen, weil nicht gänzlich vermieden werden kann, dass von der Einfüllseite her Luft durch die Beschickungseinrichtung mit in das Kaminrohr eingesaugt wird. Es wird aber gänzlich ein Eintritt von Luft in den Ofen vermieden. Eingezogene Luft wird durch den Kamineffekt nämlich nicht in den Ofen gesogen, sondern in das durch die Abdeckung gebildete Kaminrohr. In der sich anschließenden Verbrennungskammer wird durch die geregelte Zufuhr von zusätzlicher Luft die Verbrennung der Prozessgase vollendet und das verbrannte Abgas auf die erforderlichen niedrigeren Temperaturen abgekühlt.

Der Transport des Beschickungsmaterials über die Beschickungseinrichtung in Form einer Chargierrinne in den Ofen erfolgt vorzugsweise mittels Schwerkraft bzw. Fließkraft. Es ist aber auch von der Erfindung umfasst, diesen Transport mittels mechanischer Mittel, wie Rüttler und Rotationswalzen, zu unterstützen.

Die zum Einsatz kommenden Schlacken liegen zum Großteil in flüssiger Form vor. Flüssige Schlacken werden durch die gemeinsame Chargier- und Abgasöffnung chargiert. Gleichzeitig wird auch feste, stückige Schlacke chargiert. Diese wird nach einer Ausführungsform des Reduktionsofens zusammen mit dem Reduktionsmittel mittels Beschickungsrohren, die durch die Ofendecke in das Ofeninnere hereinragen, zugegeben.

Es ist nach einer weiteren Ausführungsform möglich, über die gemeinsame Chargier- und Abgasöffnung auch Feststoffe zu chargieren. Dies ist insbesondere für das Reduktionsmittel vorteilhaft, weil die oxidischen Bestandteile der Schlacke bereits während des Einfüllens in den Ofen intensiv mit dem Reduktionsmittel vermischt werden.

Insgesamt werden weitere Vorteile durch die Erfindung erreicht:
- Senkung der Betriebskosten von 300.000 bis 400.000 US$ pro Jahr;
- geringere Investitionskosten für die Entstaubungsanlage, da das Abgasvolumen der Verbrennungs- und Kühlluft für Koks und Elektroden entfällt;
- geringere Energieverluste durch ein kälteres Abgas;
- eine geringere thermische Belastung der Ofendecke durch den Wegfall der latenten Wärme, da im Ofen keinerlei Verbrennung stattfindet;
- eine einfachere Ausführung des Elektrodenstranges, da das Nachsetzen der Elektroden stark reduziert wird;
- Gewährleistung einer reduzierenden Ofenraum-Atmosphäre, die für die Gewinnung der Wertstoffe, die als Oxid vorliegen, von Vorteil ist.

Weitere Einzelheiten und Vorteile der Erfindung ergeben sich aus den Unteransprüchen und aus der nachfolgenden Beschreibung, in der die in der einzigen Figur dargestellte Ausführungsform der Erfindung näher erläutert wird. Hierbei zeigt die einzige Figur einen Schnitt durch eine schematisch angedeutete Reduktionsofenwand mit einer Öffnung, die gleichzeitig als Chargieröffnung und als Abgasöffnung dient.

Der Elektroreduktionsofen 1 ist mit Hilfe der Ofenwandung 2 angedeutet. Ein solcher Elektroreduktionsofen 1 dient zur Durchführung beispielsweise von Recycling-Prozessen wie oxidischen Abfallprozessen und insbesondere zur Reinigung von Schlacken zur Rückgewinnung metallischer Bestandteile. Hierzu wird in das Ofeninnere Oᵢ mindestens eine Elektrode (nicht gezeigt) eingeführt, wobei das Beschickungsmaterial über die eingebrachte Energie aufgeschmolzen oder auf hohe Temperaturen gebracht wird, so dass die Reduktionsprozesse mit Hilfe der eingeführten Reduktionsmittel, wie Kohle und Koks, ablaufen können.

In die Ofenwandung 2 ist eine Chargieröffnung 3 eingebracht. Durch diese ragt eine Beschickungseinrichtung 4, hier in Form einer Chargierrinne 5 oder Schlackeneinlaufrinne, die durch eine Gestell 6 gestützt ist. Mittels der Chargierrinne 5 wird Schlacke in den Ofen chargiert (Pfeil I). Gleichzeitig dient diese Öffnung 3 auch als Ableitungsöffnung für die während der Reduktion entstehenden Prozessgase, die hier mit CO und aufgrund gasförmiger Metalldämpfe, wie Zink, mit {Zn} bezeichnet sind (Pfeil II). Grundsätzlich ist diese Öffnung 3 die einzige Abgasöffnung. Für Notfälle kann allerdings ein Notkamin für das Abgas vorgesehen sein.

Die Chargierrinne 5 ist luftdicht gegenüber der Ofenwand 2 abgedichtet. Hierzu ist sie mit einer Abdeckung 7 in Form eines metallischen Gehäuses versehen, die sich von der Ofenwand 2 bis zur Eintrittsöffnung 8 der Chargierrinne 5 erstreckt. Es ergibt sich somit eine Art Tunnel für das Beschickungsgut. Auf Seiten der Eintrittsöffnung 8 ist die Abdeckung 7 etwas aufgebogen, um Raum für das Beschickungsgut zu gewähren. Ofennah erstreckt sich von einer Öffnung 9 in der Abdeckung 7 ein Kaminrohr 10 weg von der Abdeckung 7. Auf diese Weise ist die Abdeckung 7 in eine obere Richtung als Abgaskamin ausgebildet.

An das Kaminrohr 10 schließt sich in Abgasströmungsrichtung eine Nachverbrennungskammer 11 an. In diese mündet ein Zuflusskanal 12, der Luft in die Nachverbrennungskammer 11 transportiert.

Nachfolgend soll der Prozess erläutert werden. Beschickungsmaterial, wie flüssige Schlacke, wird kontinuierlich über die Chargierrinne 5 in das Ofeninnere chargiert (Pfeil I). Reduktionsmittel wird über separate Beschickungsrohre im Ofendeckel oder ggfs. ebenfalls über die Chargierrinne chargiert. Gleichzeitig strömen Prozessgase entgegen der Chargierrichtung durch die gleiche Öffnung 3 in die kaminartige Abdeckung (Pfeil II). Sie fließen durch das Kaminrohr ab (Pfeil III). Luft (Pfeil IV), die mit dem Beschickungsmaterial mit eingesogen wird, wird ebenfalls durch das Kaminrohr 10 abgeleitet (Pfeil V). Mit dieser Luft kann eine Teilverbrennung der Gase in diesem Kaminrohr 10 stattfinden, die eigentliche Nachverbrennung mit geregelter Luftzufuhr findet aber in der nachgeordneten Verbrennungskammer 11 statt, in die geregelt Luft eingeführt wird (Pfeil Vl).

Insgesamt wird mit der Erfindung ein geschlossener Elektroreduktionsofen zur Reinigung von flüssigen Schlacken geschaffen, der eine geschlossene Bauweise erhält, indem nur noch eine Gasöffnung im Ofen vorgesehen ist, durch die gleichzeitig flüssige Schlacke chargiert und das Ofengas abgesaugt wird. Dadurch kann keine Falschluft in den Ofen eindringen.

### Bezugszeichenliste:

- 1: Elektroreduktionsofen
- 2: Ofenwandung
- 3: Chargieröffnung
- 4: Beschickungseinrichtung
- 5: Chargierrinne
- 6: Gestell
- 7: Abdeckung
- 8: Eintrittsöffnung
- 9: Öffnung in Abdeckung
- 10: Kaminrohr
- 11: Nachverbrennungskammer
- 12: Zuflusskanal für Luft

- Oi: Ofeninneres
- Pfeil I: Chargierrichtung von Schlacke und Reduktionsmittel
- Pfeil II: Abströmrichtung der Prozessgase
- Pfeil III: Fluss der Prozessgase durch Kamin
- Pfeil IV: eingesaugte Luft von der Einfüllseite her
- Pfeil V: Ableitung der eingesaugten Luft durch den Kamin
- Pfeil VI: geregelte Luftzufuhr für Nachverbrennung

## Patentansprüche

1. Elektroreduktionsofen (1) zur Durchführung von Reduktionsprozessen, insbesondere zur Reduktion von Schlacke zur Rückgewinnung metallischer Bestandteile, mittels elektrischer Energie, die über mindestens eine Elektrode in das Ofeninnere (Oi) eingebracht wird, wobei der Reduktionsofen (1) eine Chargieröffnung (3) für Beschickungsmaterial aufweist, das über eine Beschickungseinrichtung (4) transportiert wird, sowie eine Öffnung zur Ableitung für das während des Reduktionsprozesses entstehenden Gases aus dem Ofen, wobei die Chargieröffnung (3) für das Beschickungsmaterial gleichzeitig als Abgasleitungsöffnung für das entstehende Gas dient, wobei
der Ofen (1) in einer luftabgedichteten Bauweise ausgeführt ist, die Beschickungseinrichtung (4) außerhalb des Ofens mit einer Abdeckung (7) versehen ist, die gegenüber dem Ofengefäß abgedichtet ist und ofennah ein Kaminrohr (10) zur Gasableitung aufweist, dass nach oben hin als Abgaskamin ausgebildet ist, wobei durch die gemeinsame Chargier- und Abgasöffnung (3) die Beschickungseinrichtung in das Ofeninnere (Oi) hineinragt oder an der Öffnung (3) mündet, wobei
die Beschickungseinrichtung eine Chargierrinne (5) ist,
der Transport des Beschickungsmaterials über die Chargierrinne (5) in den Ofen mittels Schwerkraft erfolgt oder durch mechanische Mittel, wie Rüttler oder Rotationswalzen, unterstützt wird,
der Ofen, der eine Ofendecke aufweist, zur Beschickung von Reduktionsmittel und/oder von fester Schlacke mindestens ein Beschickungsrohr aufweist, das durch die Ofendecke in das Ofeninnere hineinragt und
dass sich an das Kaminrohr (10) eine Nachverbrennungskammer (11) anschließt.

2. Elektroreduktionsofen nach Anspruch 1,
**dadurch gekennzeichnet,**
**dass** die Nachverbrennungskammer (11) mit einem Luftzuführkanal (12) verbunden ist zur geregelten Einbringung von Luft und zur geregelten Nachverbrennung der Prozessgase.

3. Elektroreduktionsofen nach Anspruch 1 oder 2,
**dadurch gekennzeichnet,**
**dass** die gemeinsame Chargier- und Abgasöffnung (3) in der Ofenwandung (2) oder im Ofendeckel angeordnet ist, an die sich die Beschickungseinrichtung (3) mit Abdeckung (7) ofenaußenseitig luftdicht anschließt.

4. Elektroreduktionsofen nach einem der Ansprüche 1 bis 3,
**dadurch gekennzeichnet,**
**dass** durch die gemeinsame Chargier- und Abgasleitungsöffnung flüssige Schlacke chargierbar ist.

5. Elektroreduktionsofen nach einem der Ansprüche 1 bis 4,
**dadurch gekennzeichnet,**
**dass** durch die gemeinsame Charier- und Abgasleitungsöffnung Feststoffe, wie feste Schlacke und/oder Reduktionsmittel, chargierbar ist.

## Claims

1. A submerged arc furnace (1) for carrying out reduction processes, particularly for the reduction of slag in order to reclaim metallic components, by means of electric energy that is introduced into the furnace interior (Oi) by means of at least one electrode, with the reduction furnace (1) featuring a charging aperture (3) for charging material that is transported by means of a charging device (4), as well as an aperture for discharging the gas produced during the reduction process from the furnace, and with the charging aperture (3) for the charging material simultaneously serving as waste gas line aperture for the gas being produced, wherein
the furnace (1) is realized in the form of an airtight construction and the charging device (4) is provided with a cover (7) outside the furnace, with said cover being sealed relative to the furnace vessel and featuring a chimney pipe (10) in the proximity of the furnace which serves for discharging the gas and is realized in the form of a waste gas chimney toward the top, and with the charging device protruding into the furnace interior (Oi) through the common charging and waste gas aperture (3) or ending at the aperture (3), and wherein
the charging device consists of a charging chute (5) and the transport of the charging material into the furnace is realized via the charging chute (5) with the aid of the gravitational force or promoted with mechanical means such as vibrators or rotating rollers, with the furnace featuring a furnace roof and at least one charging pipe that serves for charging the furnace with reducing agent and/or solid slag and protrudes into the furnace interior through the furnace roof, and with a post-combustion chamber (11) being connected to the chimney pipe (10) downstream thereof.

2. The submerged arc furnace according to Claim 1,
**characterized in**
**that** the post-combustion chamber (11) is connected to an air supply channel (12) for introducing air in a controlled fashion and for realizing a controlled post-combustion of the process gases.

3. The submerged arc furnace according to Claim 1 or 2,
**characterized in**
**that** the common charging and waste gas aperture (3) is arranged in the furnace wall (2) or in the furnace roof, to which the charging device (3) with the cover (7) is connected in an airtight fashion on the outside of the furnace.

4. The submerged arc furnace according to one of Claims 1 to 3,
**characterized in**
**that** the furnace can be charged with liquid slag through the coming charging and waste gas line aperture.

5. The submerged arc furnace according to one of Claims 1 to 4,
**characterized in**
**that** the furnace can be charged with solid matter such as solid slag and/or reducing agent through the common charging and waste gas line aperture.

## Revendications

1. Four d'électroréduction (1) pour mettre en oeuvre des processus de réduction, en particulier pour la réduction de scories pour récupérer des composantes métalliques au moyen d'énergie électrique qui est appliquée par l'intermédiaire d'au moins une électrode dans l'intérieur du four (Oi), le four de réduction (1) présentant une ouverture de chargement (3) pour le matériau à charger qui est transporté par un dispositif de chargement (4), ainsi qu'une ouverture pour évacuer hors du four les gaz qui se produisent pendant le processus de réduction, l'ouverture de chargement (3) pour le matériau à charger servant simultanément d'ouverture d'évacuation de gaz d'échappement pour les gaz qui se produisent,
dans lequel
le four (1) est réalisé en mode de construction étanché vis-à-vis de l'air, le dispositif de chargement (4) est pourvu, à l'extérieur du four; d'un recouvrement (7) qui est étanché par rapport à la carcasse du four et qui présente à proximité du four un tube de cheminée (10) pour l'évacuation des gaz, qui est réalisé vers le haut sous forme de cheminée à gaz d'échappement, le dispositif de chargement pénétrant dans l'intérieur du four (Oi) à travers l'ouverture de chargement et d'échappement de gaz (3) commune ou bien débouchant au niveau de l'ouverture (3),
le dispositif de chargement est une goulotte de chargement (5),
le transport du matériau à charger par l'intermédiaire de la goulotte de chargement (5) jusque dans le four s'effectue par la gravité ou est assisté par des moyens mécaniques, tels que des secoueurs ou des cylindres en rotation,
le four qui comprend un plafond de four présente au moins un tube de chargement qui est destiné au chargement d'agents de réduction et/ou de scories solides et qui pénètre dans l'intérieur du four à travers le plafond de four, et
au tube de cheminée (10) se raccorde une chambre de post-combustion (11).

2. Four d'électroréduction selon la revendication 1,
**caractérisé en ce que**
la chambre de post-combustion (11) est reliée à un canal d'amenée d'air (12) pour l'introduction régulée d'air et pour la post-combustion régulée des gaz de processus.

3. Four d'électroréduction selon la revendication 1 ou 2,
**caractérisé en ce que**
l'ouverture de chargement et d'échappement de gaz (3) commune est ménagée dans la paroi de four (2) ou dans le couvercle de four, à laquelle se raccorde, du côté extérieur du four et de façon étanche à l'air, le dispositif de chargement (3) avec le recouvrement (7).

4. Four d'électroréduction selon l'une des revendications 1 à 3,
**caractérisé en ce que**
des scories liquides peuvent être chargées à travers l'ouverture de chargement et d'échappement de gaz commune.

5. Four de réduction électrique selon l'une des revendications 1 à 4,
**caractérisé en ce que**
des solides, tels que des scories et/ou des agents de réduction solides, peuvent être chargées à travers l'ouverture de chargement et d'échappement de gaz commune.
